# EUROPEAN PATENT SPECIFICATION

(11) **EP 2 571 325 B1**
(45) Date of publication and mention of the grant of the patent: **23.04.2014**
(21) Application number: 12177757.7
(22) Date of filing: 25.07.2012
(51) Int. Cl.: H04W 74/08, H04W 84/18, H04W 84/20

(54) **Communication apparatus, communication system, and method of controlling communication apparatus**
Kommunikationsvorrichtung, Kommunikationssystem und Verfahren zur Steuerung der Kommunikationsvorrichtung
Appareil de communication, système de communication et procédé de contrôle d'appareil de communication

(30) Priority: 14.09.2011 JP 2011200875
(43) Date of publication of application: 20.03.2013
(73) Proprietor: Sony Corporation, Tokyo 108-0075 (JP)
(72) Inventor: Watanabe, Katsumi, Minato-ku, Tokyo 108-0075 (JP)
(74) Representative: Meldrum, David James

(56) References cited:
- WO-A1-03/085891
- TOMOYA TANDAI ET AL: "MAC Efficiency Enhancement with Prioritized Access Opportunity Exchange Protocol for 60 GHz Short-Range One-to-One Communications", VEHICULAR TECHNOLOGY CONFERENCE (VTC SPRING), 2011 IEEE 73RD, IEEE, 15 May 2011 (2011-05-15), pages 1-5, XP031896869, DOI: 10.1109/VETECS.2011.5956469 ISBN: 978-1-4244-8332-7
- ECMA standard: "Standard ECMA-398: Close Proximity Electric Induction Wireless Communications", , 1 June 2011 (2011-06-01), pages 1-100, XP002687723, Geneva Retrieved from the Internet: URL:http://www.ecma-international.org/publ ications/standards/Ecma-398.htm [retrieved on 2012-11-21]
- YUNXIN LIU ET AL: "A priority-based MAC scheduling algorithm for enhancing QoS support in bluetooth piconet", COMMUNICATIONS, CIRCUITS AND SYSTEMS AND WEST SINO EXPOSITIONS, IEEE 2 002 INTERNATIONAL CONFERENCE ON JUNE 29 - JULY 1, 2002, PISCATAWAY, NJ, USA,IEEE, vol. 1, 29 June 2002 (2002-06-29), pages 544-548, XP010632318, ISBN: 978-0-7803-7547-5

## Description

### BACKGROUND

The present technology relates to a communication apparatus, communication system, and a method of controlling a communication apparatus.

In the related art, there exists wireless communication technology in which various data is exchanged using wireless communication. For example, there exists wireless communication technology in which various data is exchanged by close proximity wireless communication between two communication apparatus (see ECMA-398, for example). By means of this technology, various data can be exchanged between two communication apparatus without using devices such as a card for moving data (such as a memory card) or cables.

However, depending on the protocol implemented in the communication apparatus, one of the two communication apparatus communicating with each other may continuously transmit data until data transmission is finished for that communication apparatus. In this case, data transmission from the other communication apparatus may be delayed, and depending on the protocol implemented in the communication apparatus, there is a risk of reduced throughput.

TOMOYA TANDAI ET AL: "MAC Efficiency Enhancement with Prioritized Access Opportunity Exchange Protocol for 60 GHz Short-Range One-to-One Communications", VEHICULAR TECHNOLOGY CONFERENCE {VTC SPRING), 2011 IEEE 73RD, IEEE, 15 May 2011 (2011-05-15), pages 1-5, DOI: 10.1109/VETECS.2011.5956469 describes proposes a prioritized access opportunity exchange protocol for enhancing medium access control (MAC) efficiency in short-range one-to-one wireless communications on 60 GHz millimeter wave.

D2 ECMA standard: "Standard ECMA-398: Close Proximity Electric Induction Wireless Communications", 1 June 2011 (2011-06-01), pages 1-100, Geneva; Retrieved from the Internet: URL:http://www.ecma-international.org/publications/standards/Ecma-398.htm on unknown date is standards specification that specifies a connection layer and physical layer for transferring data between two close proximity entities using induction coupling. This document does not teach or suggest ,in a communication apparatus that has a communication unit configured to conduct close proximity wireless communication on the basis of TransferJet with another communication apparatus, use of a timer configured to alternately time a first set time during which transmit rights are granted to the communication apparatus and a second set time during which transmit rights are granted to the other communication apparatus, and issue a notification to a controller when each time is reached, and a controller configured to apply control, in the case where the communication apparatus is the initiator of communication, to achieve alternately setting of transmit rights for transmitting data to a communication peer by the close proximity wireless communication between the communication apparatus and the other communication apparatus by adjusting the transmit start timing for data to be transmitted to the other communication apparatus where the adjusting comprises modifying the value of the inter-frame space, IFS, used to transmit data to the other communication apparatus every time the first set time or the second set time is respectively reached; the controller also being configured to adopt the value of the initiator inter-frame space, IIFS, as the IFS in the case of granting transmit rights to the communication apparatus; and to adopt a value larger than the responder inter-frame space, RIFS, as the IFS in the case of granting transmit rights to the other communication apparatus.

D3 YUNXIN LIU ET AL: "A priority-based MAC scheduling algorithm for enhancing QoS support in bluetooth piconet", COMMUNICATIONS, CIRCUITS AND SYSTEMS AND WEST SINO EXPOSITIONS, IEEE 2 0021NTERNATIONAL CONFERENCE ON JUNE 29- JULY 1, 2002, PISCATAWAY, NJ, USA,IEEE, vol. 1, 29 June 2002 {2002-06-29), pages 544-548, proposes an approach to MAC scheduling for QoS support in Bluetooth, a short range wireless communication technology.

WO 03/085891 A1 describes a method for controlling media access in a wireless communications network in the communications nodes monitor the shared medium in order to prevent collisions.

### SUMMARY

Particular aspects and embodiments are set forth in the appended claims.

Some examples of the present teachings can provide for improved throughput during close proximity wireless communication. Some examples of the present teachings can provide a communication apparatus that communicates with another communication apparatus using close proximity wireless communication, to a communication system including such an apparatus, and to a method of controlling a communication apparatus.

According to a first embodiment of the present technology, there are provided a communication apparatus, a method of controlling the same, and a program causing a computer to execute the method, the communication apparatus being provided with a communication unit configured to conduct close proximity wireless communication with another communication apparatus, and a controller configured to apply control to alternately set transmit rights for transmitting data to a communication peer by the close proximity wireless communication between the communication apparatus and the other communication apparatus by adjusting the transmit start timing for data to be transmitted to the other communication apparatus. Such a configuration acts to alternately set transmit rights between the communication apparatus and the other communication apparatus by adjusting the transmit start timing for data to be transmitted to the other communication apparatus.

It may also be configured such that the controller makes the adjustment by shifting a first transmit start timing with respect to a second transmit start timing, with the first transmit start timing being taken to be the above transmit start timing, and the second transmit start timing being taken to be the transmit start timing for data at the other communication apparatus to be transmitted to the communication apparatus. Such a configuration acts to adjust the transmit start timing by shifting the first transmit start timing with respect to the second transmit start timing.

It may also be configured such that the controller sets the first transmit start timing to an earlier timing than the second transmit start timing in the case of granting transmit rights to the communication apparatus, and sets the first transmit start timing to a later timing than the second transmit start timing in the case of granting transmit rights to the other communication apparatus. Such a configuration acts to set the first transmit start timing to an earlier timing than the second transmit start timing in the case of granting transmit rights to the communication apparatus, and set the first transmit start timing to a later timing than the second transmit start timing in the case of granting transmit rights to the other communication apparatus.

It may also be configured such that the communication unit conducts close proximity wireless communication on the basis of TransferJet, and the controller applies the control in the case where the communication apparatus is the initiator. Such a configuration acts to conduct close proximity wireless communication on the basis of TransferJet and control transmit rights in the case where the communication apparatus is the initiator.

It may also be configured such that the controller makes the adjustment by modifying the value of the inter-frame space (IFS) used to transmit data to the other communication apparatus. Such a configuration acts to adjust the transmit start timing by modifying the value of the IFS.

It may also be configured such that the controller adopts the value of the initiator inter-frame space (IIFS) as the IFS in the case of granting transmit rights to the communication apparatus, and adopts a value larger than the responder inter-frame space (RIFS) as the IFS in the case of granting transmit rights to the other communication apparatus. Such a configuration acts to adopt the value of the IIFS in the case of granting transmit rights to the communication apparatus, and adopt a value larger than the RIFS in the case of granting transmit rights to the other communication apparatus.

A communication apparatus according to the first embodiment of the present technology may be additionally provided with a timer configured to alternately time a first set time during which transmit rights are granted to the communication apparatus and a second set time during which transmit rights are granted to the other communication apparatus, and issue a notification to the controller when each time is reached. The controller may then be configured to make the adjustment by modifying the value of the IFS every time the first set time or the second set time is respectively reached. Such a configuration acts to adjust the transmit start timing by modifying the value of the IFS every time the first set time or the second set time is respectively reached.

It may also be configured such that the controller determines the ratio between a first set time during which transmit rights are granted to the communication apparatus and a second set time during which transmit rights are granted to the other communication apparatus, on the basis of settings in a user application layer or a protocol conversion layer (PCL). Such a configuration acts to determine the ratio of the first set time and the second set time on the basis of settings in a user application layer or a PCL layer.

According to a second embodiment of the present technology, there are provided a communication system, a method of controlling the same, and a program causing a computer to execute the method, the communication system being provided with a second communication apparatus and a first communication apparatus. The second communication apparatus includes a communication unit configured to conduct close proximity wireless communication with a first communication apparatus on the basis of transmit rights for transmitting data to a communication peer. The first communication apparatus includes a communication unit configured to conduct close proximity wireless communication with the second communication apparatus on the basis of the transmit rights, and a controller configured to alternately grant transmit rights to the first communication apparatus and the second communication apparatus by adjusting a transmit start timing for data to be transmitted to the second communication apparatus. Such a configuration acts to alternately set transmit rights between the first communication apparatus and the second communication apparatus by having the first communication apparatus adjust the transmit start timing for data to be transmitted to the second communication apparatus.

According to an embodiment of the present technology, it is possible to achieve improved throughput during close proximity wireless communication.

### BRIEF DESCRIPTION OF THE DRAWINGS

Figs. 1A to 1C are simplified illustrations of communication apparatus in a first embodiment of the present technology;
Fig. 2 is a block diagram illustrating an example functional configuration of a communication apparatus in a first embodiment of the present technology;
Fig. 3 illustrates an example protocol stack configuration for a communication apparatus in a first embodiment of the present technology;
Fig. 4 schematically illustrates the state of communication conducted between communication apparatuses in a first embodiment of the present technology;
Figs. 5A and 5B schematically illustrate how communication is conducted between communication apparatuses in a first embodiment of the present technology;
Fig. 6 schematically illustrates an example of establishing a connection between communication apparatuses in a first embodiment of the present technology, and an example of transmitting a data frame after the connection is established;
Figs. 7A and 7B schematically illustrate example structures of packets (i.e., transmit packets) transmitted and received between communication apparatuses in a first embodiment of the present technology;
Fig. 8 schematically illustrates IFS examples used during communication between two communication apparatuses in a first embodiment of the present technology;
Fig. 9 schematically illustrates a time series of data exchange between communication apparatuses in a first embodiment of the present technology;
Figs. 10A to 10C schematically illustrate time series of IFS periods, which are modified on the basis of an IIFS switch trigger issued by an IIFS timer in a first embodiment of the present technology;
Fig. 11 schematically illustrates a time series of data exchange between communication apparatuses in a first embodiment of the present technology;
Figs. 12A to 12C illustrate time series of example relationships between Ack and PSDU (PHY SDU) transmitted and received between two communication apparatuses in a first embodiment of the present technology; and
Fig. 13 is a flowchart illustrating an example processing sequence for a communication process conducted by a communication apparatus in a first embodiment of the present technology.

### DETAILED DESCRIPTION

Hereinafter, detailed description of example approaches for carrying out the present technology (hereinafter designated the embodiment) will be described. The description will proceed in the following order.

A first embodiment of the described technology relates to communication control, and in one example to alternately setting transmit rights between an initiator and a communication peer by adjusting the transmit start timing at the initiator.

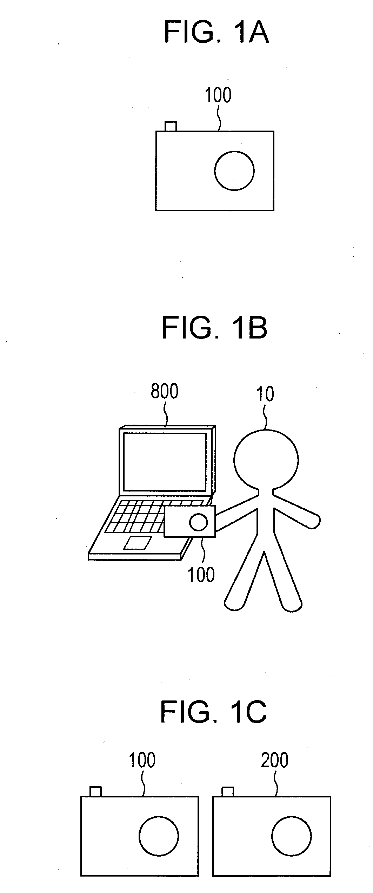

Figs. 1A to 1C are simplified illustrations of communication apparatus in a first embodiment of the present technology. In the first embodiment of the present technology, example usage of communication apparatus implementing a close proximity wireless communication protocol will be described. Specifically, in the first embodiment of the present technology, the multiple access method of TransferJet™ will be described.

TransferJet is a close proximity wireless communication protocol using the 4.48 GHz band. By using this communication protocol (TransferJet), it is possible to realize close proximity data communication at high speeds up to a maximum of 560 Mbps while using -70 dBm/MHz or less power with 4.48 GHz radio waves. Additionally, by limiting the communication range of the close proximity wireless communication to several centimeters, it is possible to speed up communication processing while also miniaturizing the communication apparatus and achieving lower power consumption.

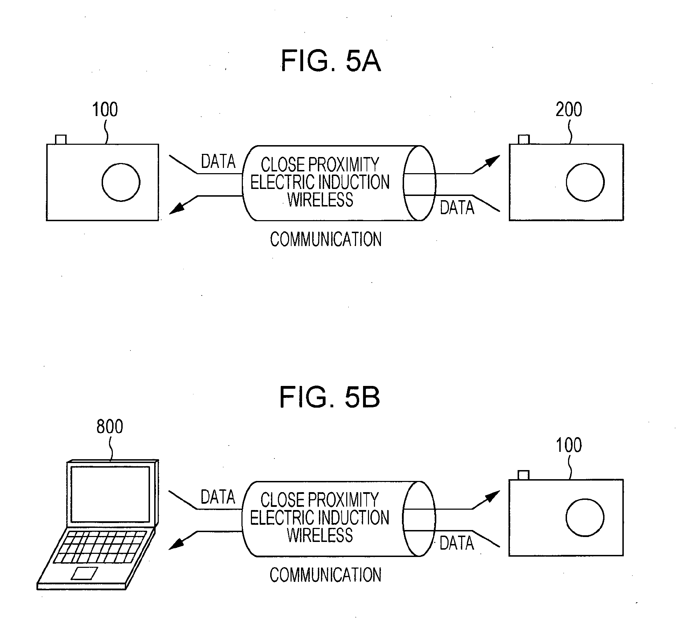

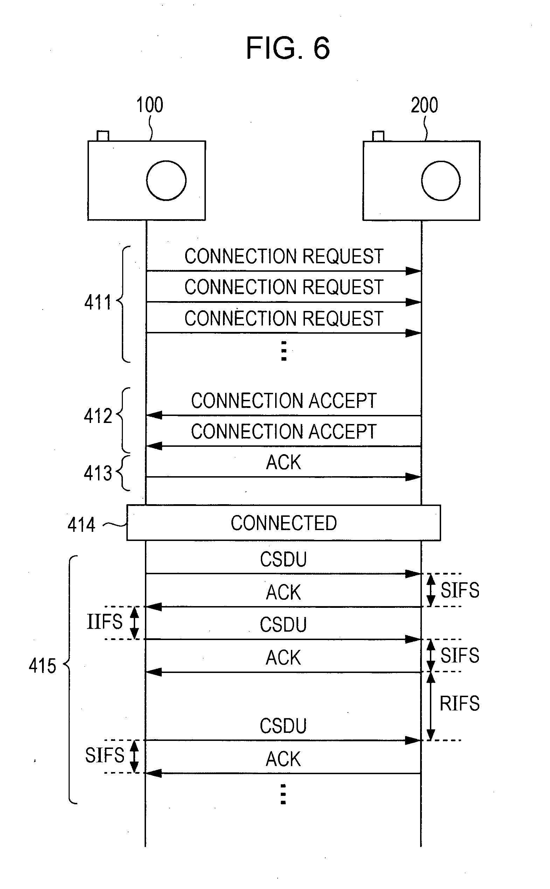

Also, with TransferJet, two nearby communication apparatus communicate by taking on the two roles of initiator and responder, respectively. However, the initiator and responder can both transmit and receive data irrespective of their roles. Furthermore, the initiator and responder can also switch roles according to the usage conditions or user operations. Examples of such communication will be described in detail with reference to Figs. 5A, 5B, and 6.

Herein, devices such as digital still cameras, personal computers (PCs), and mobile devices (such as mobile phones and smartphones, for example) are assumed as communication apparatus that use TransferJet. Thus, in Figs. 1A to 1C, simplified illustrations of digital still cameras and a personal computer are given as examples of communication apparatus that use TransferJet. Also, simplified illustrations of an initiator and a responder in a state of communication are given in Figs. 1B and 1C. Note that in the attached drawings, the role of each communication apparatus (i.e., initiator or responder) is indicated in parenthesis together with the name of the communication apparatus.

Fig. 1A illustrates a communication apparatus 100 provided with close proximity wireless communication functions and an imaging unit. The communication apparatus 100 may be a digital still camera or a digital video camera (i.e., camcorder), for example. In addition, part of the communication apparatus (camera) 100 (such as part of its exterior surface) functions as a communication surface. At this point, the communication apparatus (camera) 100 generally becomes a responder, and enters a state of waiting for a connection request in a low-power mode. A connection request will be described in detail with reference to Fig. 6.

Fig. 1B illustrates a state of communication between a communication apparatus 800 provided with close proximity wireless communication functions and the communication apparatus 100. The communication apparatus 800 may be a personal computer (PC), for example. In addition, part of the communication apparatus (PC) 800 (such as part of its operable surface on which an operable unit is provided) functions as a communication surface. At this point, the communication apparatus (PC) 800 generally becomes an initiator, and continually transmits an intermittent connection request. In this case, a user 10 holding the communication apparatus (camera) 100 in his or her hand may bring the communication surface of the communication apparatus (camera) 100 in proximity with the communication surface of the communication apparatus (PC) 800 (in other words, the user may perform a waving operation). With this operation, the user 10 is able to initiate a data communication process between the communication apparatus (camera) 100 and the communication apparatus (PC) 800.

Fig. 1C illustrates a state of communication between a communication apparatus 200, which is provided with close proximity wireless communication functions and an imaging unit, and the communication apparatus 100. At this point, in the case of communicating between cameras, the camera that will transmit content (such as still image files or video files, for example) becomes the initiator and transmits a connection request. In this case, an operation of bringing the communication surface of the communication apparatus (camera) 100 in proximity with the communication surface of the communication apparatus (camera) 200 (in other words, a waving operation) is performed. With this operation, a user is able to initiate a data communication process between the communication apparatus (camera) 100 and the communication apparatus (camera) 200.

Although cameras and a PC are described by way of example in Figs. 1A to 1C, the above may be similarly applied to other communication apparatus provided with wireless communication functions. For example, the above may also be applied to a mobile phone device (such as a smartphone provided with telephony functions and data communication functions), an audio output device (such as a portable music player), or a display device provided with wireless communication functions (such as a digital photo frame).

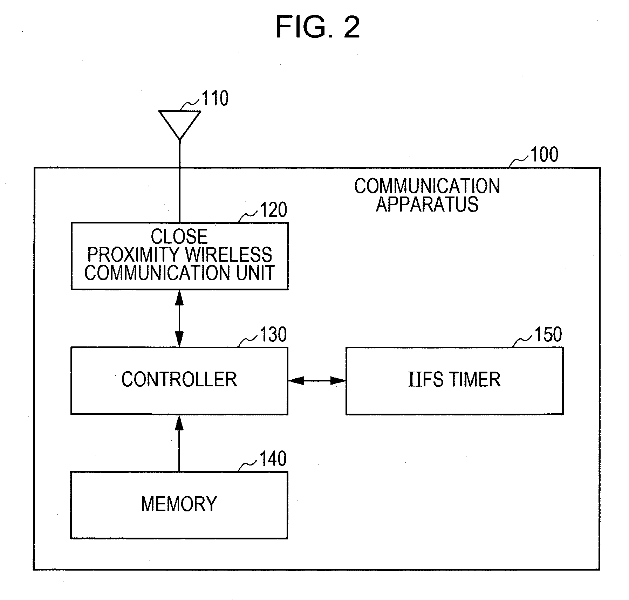

Fig. 2 is a block diagram illustrating an example functional configuration of a communication apparatus 100 in a first embodiment of the present technology. Since functional components related to wireless communication in the communication apparatus 200 and the communication apparatus 800 are similar to those of the communication apparatus 100, description thereof is herein reduced or omitted.

The communication apparatus 100 is provided with an antenna 110, a close proximity wireless communication unit 120, a controller 130, memory 140, and an IIFS timer 150.

The antenna 110 is connected to the close proximity wireless communication unit 120, and is an antenna for transmitting and receiving radio waves to and from other communication apparatus (such as the communication apparatus 200 and communication apparatus 800) by wireless signals using an induction field or magnetic field.

The close proximity wireless communication unit 120 is a communication module that executes close proximity wireless communication based on the TransferJet standard. In other words, the close proximity wireless communication unit 120 conducts close proximity wireless communication with another communication apparatus (i.e., a communication apparatus provided with close proximity wireless communication functions) existing within a given communication range from the close proximity wireless communication unit 120 (and the antenna 110). Herein, close proximity wireless communication between the close proximity wireless communication unit 120 and another communication apparatus becomes possible in the case where the close proximity wireless communication unit 120 and the other communication apparatus are in close proximity to each other. Close proximity herein means a contacting or nearly contacting state in which the distance between the close proximity wireless communication unit 120 and the other communication apparatus is within a given range (such as 3 cm), for example. Note that the antenna 110 and the close proximity wireless communication unit 120 may also be configured as a single module. The close proximity wireless communication unit 120 herein is one example of a communication unit.

The controller 130 controls the operation of respective units in the communication apparatus 100 on the basis of a control program stored in the memory 140. The controller 130 may be realized by a microprocessor, for example. For example, the controller 130 is connected to the close proximity wireless communication unit 120 and controls the transmitting and receiving of various data to and from another communication apparatus connected via the close proximity wireless communication unit 120.

Assume the case where the communication apparatus 100 has become the initiator. In this case, the controller 130 applies control to alternately set transmit rights for transmitting data to a communication peer by close proximity wireless communication between the communication apparatus 100 and another communication apparatus by adjusting the transmit start timing for data to be transmitted to the other communication apparatus. The communication peer indicated herein means a responder in the case where the initiator is taken as the point of reference, and means an initiator in the case where the responder is taken as the point of reference.

Herein, the above transmit start timing is taken to be the first transmit start timing, whereas the transmit start timing for data to be transmitted to the communication apparatus 100 in the other communication apparatus is taken to be the second transmit start timing. In this case, the controller 130 adjusts the transmit start timing by shifting the first transmit start timing with respect to the second transmit start timing.

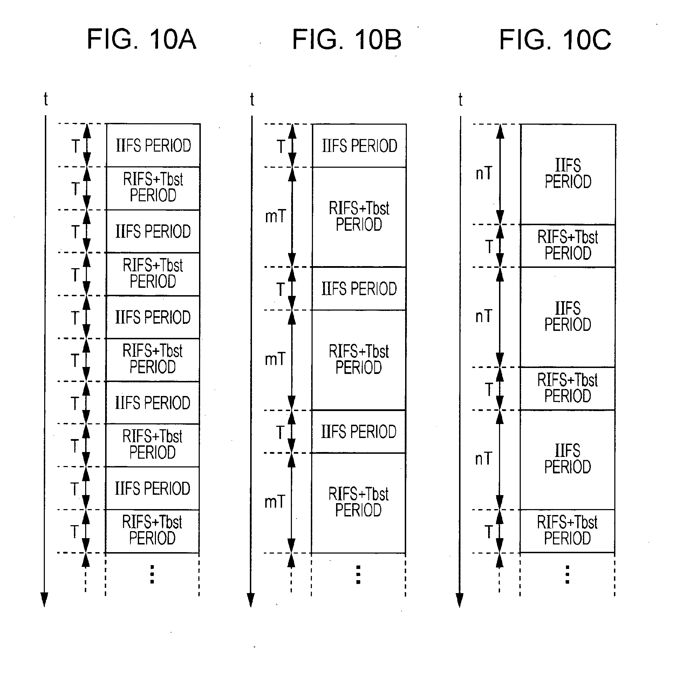

Specifically, the controller 130 sets the first transmit start timing earlier than the second transmit start timing in the case of granting transmit rights to the communication apparatus 100 (such as during the IIFS period illustrated in Figs. 10A to 10C). Also, the controller 130 sets the first transmit start timing later than the second transmit start timing in the case of granting transmit rights to the other communication apparatus (such as during the RIFS+Tbst period illustrated in Figs. 10A to 10C). These transmit start timings will be described in detail with reference to Figs. 10A to 10C.

The controller 130 also adjusts the transmit start timing by modifying the value of the inter-frame space (IFS) used to transmit data to another communication apparatus. Specifically, the controller 130 adopts the value of an initiator inter-frame space (IIFS) as the IFS in the case of granting transmit rights to the communication apparatus 100. Meanwhile, the controller 130 adopts a value that is larger than a responder inter-frame space (RIFS) as the IFS in the case of granting transmit rights to the other communication apparatus.

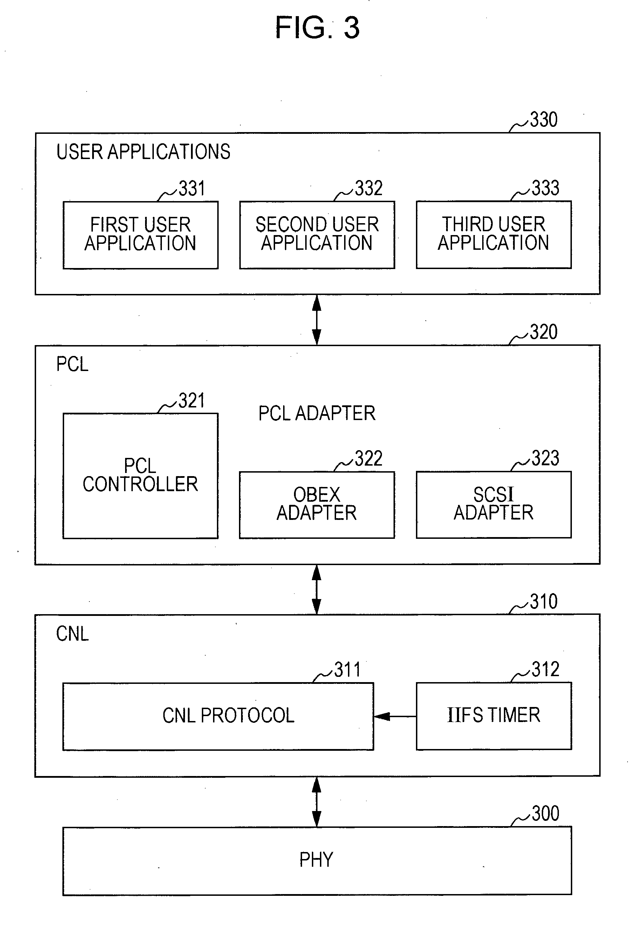

Also, the controller 130 determines the ratio of a first set time and a second set time on the basis of settings in the user application layer 330 or the protocol conversion layer (PCL) 320 illustrated in Fig. 3. Herein, the first set time is the time during which transmit rights are granted to the communication apparatus 100, and corresponds to the IIFS period illustrated in Figs. 10A to 10C, for example. Also, the second set time is the time during which transmit rights are granted to another communication apparatus, and corresponds to the RIFS+Tbst period illustrated in Figs. 10A to 10C, for example. The controller 130 also outputs the determined first set time and second set time to the IIFS timer 150 for storage.

On the basis of connection rights configured in this way, the other communication apparatus that communicates with the communication apparatus 100 by close proximity wireless communication is able to transmit data.

The memory 140 stores information such as control programs by which the controller 130 applies various controls (such as various application programs and a communication control program for the control of close proximity wireless communication by the close proximity wireless communication unit 120), transmit data, and receive data. The memory 140 may include read-only memory (ROM) and random access memory (RAM), for example.

The IIFS timer 150 is a timer that alternately times the first set time during which transmit rights are granted to the communication apparatus 100, and the second set time during which transmit rights are granted to another communication apparatus. In addition, when the first set time or the second set time has been reached, the IIFS timer 150 issues a notification (i.e., an IIFS switch trigger) to the controller 130. The IIFS timer 150 herein is one example of a timer.

Upon receiving from the IIFS timer 150 a notification indicating that the first set time or the second set time has been reached (i.e., an IIFS switch trigger), the controller 130 applies control to modify the value of the IFS. In other words, the value of the IFS is modified (switched) every time the first set time or the second set time is respectively reached. The switching of the IIFS value will be described in detail with reference to Figs. 10A to 10C.

Fig. 3 illustrates an example protocol stack configuration for a communication apparatus 100 in a first embodiment of the present technology. Fig. 3 illustrates an example configuration of a communication protocol stack for wireless communication by TransferJet. The communication protocol stack has four layers, namely, a physical layer (PHY) 300, a connection layer (CNL) 310, a protocol conversion layer (PCL) 320, and a user application layer 330.

The PHY layer 300 provides physical wireless connections, and may correspond to the close proximity wireless communication unit 120 illustrated in Fig. 2, for example.

The CNL layer 310 conducts setup and release of connections in the PHY layer 300, and includes a CNL protocol 311 and an IIFS timer 312. The CNL layer 310 also provides arbitration of transmitting and receiving between initiator and responder, and guarantees data continuity and data certainty (i.e., the absence of errors).

The PCL layer 320 converts protocols from upper and lower layers, and includes a PCL controller 321, an OBEX adapter 322, and a SCSI adapter 323. Specifically, procedures such as connection setup, connection release, and device authentication are conducted in the PCL layer 320. Also, procedures such as operation mode setting and initialization to the upper layer are conducted in the PCL layer 320.

The user application layer 330 represents individual user applications that use TransferJet. For example, the user application layer 330 may include a first user application 331, a second user application 332, and a third user application 333.

Herein, the CNL layer 310, the PCL layer 320, and the user application layer 330 may be realized as a result of the controller 130 executing a program stored in the memory 140, for example.

The IIFS timer 312 implemented in the CNL layer 310 will now be described. The IIFS timer 312 is equivalent to the IIFS timer 150 illustrated in Fig. 2, and is a timer independent from the CNL protocol 311. Also, the IIFS timer 312 issues an IIFS switch trigger according to a ratio determined independently of the state of the CNL protocol 311. The CNL protocol 311 also switches the value of the IIFS according to an IIFS switch trigger issued by the IIFS timer 312. Switching the IIFS value will be described in detail with reference to Figs. 10A to 10C.

In this way, with the first embodiment of the present technology, the value of the IIFS can be varied asynchronously with the CNL protocol 311. For this reason, the difficulty of implementing the protocol can be greatly reduced.

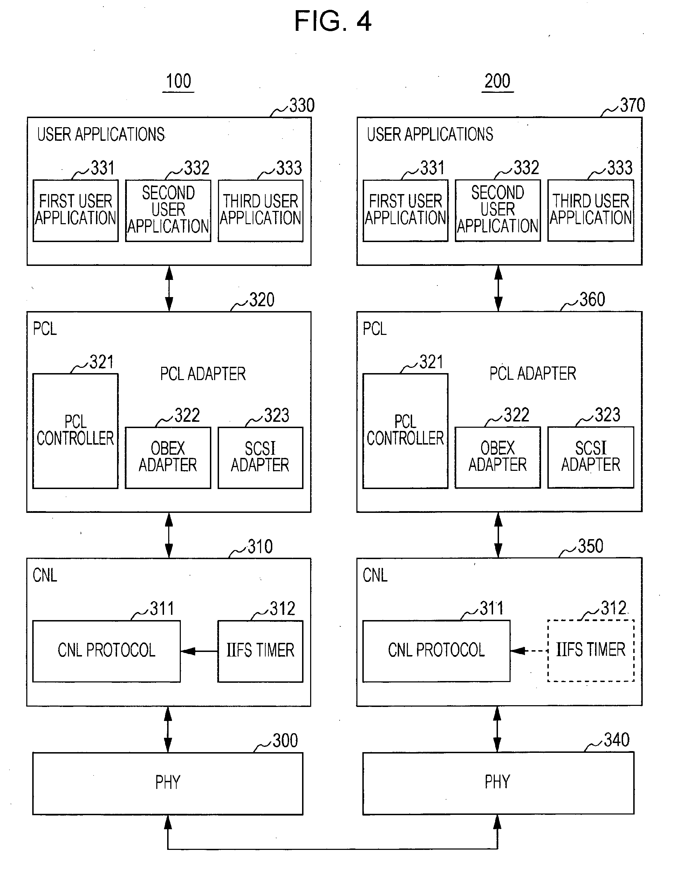

Fig. 4 schematically illustrates the state of communication conducted between communication apparatus 100 and 200 in a first embodiment of the present technology. Fig. 4 illustrates an example of communication conducted between communication apparatus 100 and 200 in a state where the communication apparatus 100 acts as initiator and the communication apparatus 200 acts as responder, as illustrated in Fig. 1C. Additionally, the configurations of the respective communication protocol stacks are taken to be similar to that in Fig. 3. For this reason, in Fig. 4, the communication apparatus (initiator) 100 is labeled with reference signs like those in Fig. 3, while the communication apparatus (responder) 200 is labeled with reference signs like those in Fig. 3 excepting the reference signs that correspond to the respective layers.

Assume the case of conducting close proximity wireless communication by TransferJet between the communication apparatus (initiator) 100 and the communication apparatus (responder) 200. With such close proximity wireless communication, application data is communicated between the user application layers 330 and 370. The application data may be output from the user application layer 330 to the PHY layer 300 via the PCL layer 320 and the CNL layer 310, for example. The application data is then transmitted from the PHY layer 300 to the peer communication apparatus.

For example, in the communication apparatus (initiator) 100, a connection process may be conducted in the CNL layer 310, the PCL layer 320, and the user application layer 330, in that order. A similar connection process is also conducted in the communication apparatus (responder) 200. Also, in the communication apparatus (initiator) 100, an IIFS time ratio (N:M) is determined according to settings in the user application layer 330 or the PCL layer 320. In other words, the ratio of the first set time and the second set time discussed earlier is determined on the basis of settings in the user application layer 330 or the PCL layer 320.

After a time ratio is determined in this way, the IIFS timer 312 is initiated independently from the CNL protocol processed by the CNL protocol 311. The IIFS timer 312 then issues an IIFS switch trigger to the CNL protocol 311 when the IIFS timer 312 reaches a stipulated time (i.e., the first set time or the second set time).

In the first embodiment of the present technology, although the value of the IIFS is switched in the initiator at this point, the RIFS value continues to be used in the responder. For this reason, the IIFS timer 312 in the communication apparatus (responder) 200 is indicated with a broken line in Fig. 4.

Figs. 5A and 5B schematically illustrate how communication is conducted between communication apparatus 100 and 200 in a first embodiment of the present technology.

Fig. 5A illustrates an example of communication conducted between communication apparatus 100 and 200 in a state where the communication apparatus 100 acts as initiator and the communication apparatus 200 acts as responder, as illustrated in Fig. 1C.

For example, in the case where a TransferJet communication channel is established by the user, the communication apparatus (initiator) 100 continually transmits a management frame (referred to as a connection request). Meanwhile, the communication apparatus (responder) 200 continually waits for a connection request in a low-power standby state. Upon receiving a connection request while in this state, the communication apparatus (responder) 200 enters a connected state in which a communication channel has been established.

Fig. 5B illustrates an example of communication conducted between communication apparatus 100 and 800 in a state where the communication apparatus 100 acts as responder and the communication apparatus 800 acts as initiator, as illustrated in Fig. 1B. Since the example communication between initiator and responder illustrated in Fig. 5B is similar to that of Fig. 5A, description thereof will be reduced or omitted. However, in Fig. 5B, the role of the communication apparatus 100 is switched from initiator to responder.

Fig. 6 schematically illustrates an example of establishing a connection between communication apparatus 100 and 200 in a first embodiment of the present technology, and an example of transmitting a data frame after the connection is established. The data frame is referred to as a CNL service data unit (CSDU). In Fig. 6, the vertical axis is taken to be a time axis.

Upon receiving a request to establish a communication channel based on a user operation, the communication apparatus (initiator) 100 continually transmits a connection request (411).

Upon receiving a connection request from the communication apparatus (initiator) 100, the communication apparatus (responder) 200 transmits a management frame to the communication apparatus (initiator) 100 (412). Like that discussed earlier, the management frame is referred to as a connection acceptance.

Subsequently, upon receiving a connection acceptance from the communication apparatus (responder) 200, the communication apparatus (initiator) 100 transmits an Ack frame in response to the connection acceptance (413).

Subsequently, upon receiving an Ack frame from the communication apparatus (initiator) 100, the communication apparatus (responder) 200 enters a connected state, and a communication channel is established (414).

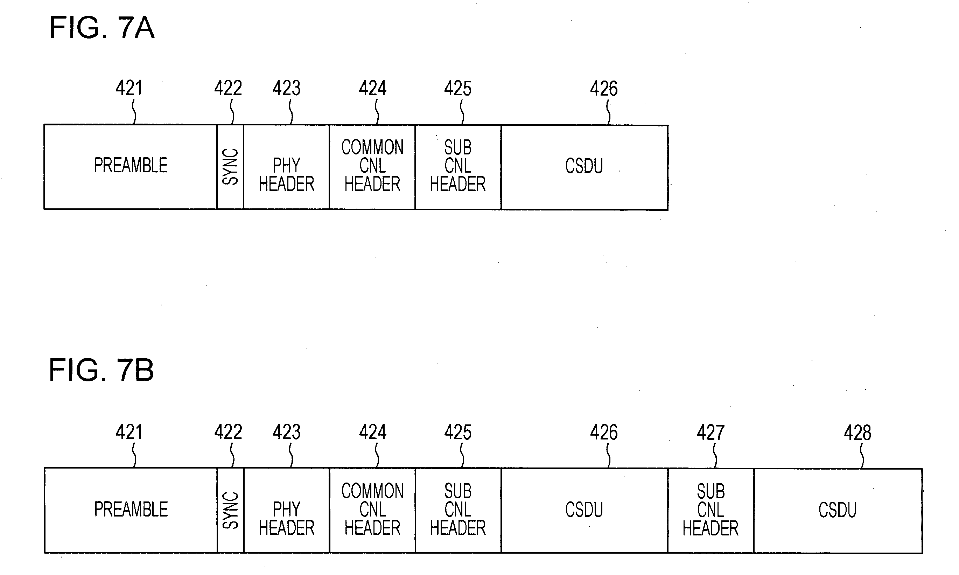

In this state with a communication channel established, the communication apparatus (initiator) 100 and the communication apparatus (responder) 200 start transmitting CSDU packets at timings independent from each other (415). CSDU packets to be transmitted will be described in detail with reference to Figs. 7A and 7B.

TransferJet implements carrier sense multiple access with collision avoidance (CSMA/CA) as its access method. For this reason, collisions may occur in the case where initiator and responder transmit packets contemporaneously. However, after such a collision, transmit rights are controlled according to the value of the IFS after one of the packets is transmitted and received. The IIFS value is used as the IFS in the initiator, whereas the RIFS value is used in the responder. The control of transmit rights will be described in detail with reference to Figs. 10A to 12C.

Figs. 7A and 7B schematically illustrate example structures of packets (i.e., transmit packets) transmitted and received between communication apparatus in a first embodiment of the present technology. Specifically, Figs. 7A and 7B illustrate frame formats for frames that include one or more CSDUs.

Fig. 7A illustrates the structure of a transmit packet in the case where a single packet contains one CSDU. The transmit packet contains a preamble 421, a sync field 422, and a PHY header 423. The transmit packet also contains a common CNL header 424, a sub CNL header 425, and a CSDU 426.

Fig. 7B illustrates the structure of a transmit packet in the case where a single packet contains two CSDUs. The transmit packet contains a sub CNL header 427 and a CSDU 428.

As illustrated in Figs. 7A and 7B, with TransferJet it is possible for a single packet to contain a maximum of two CSDUs.

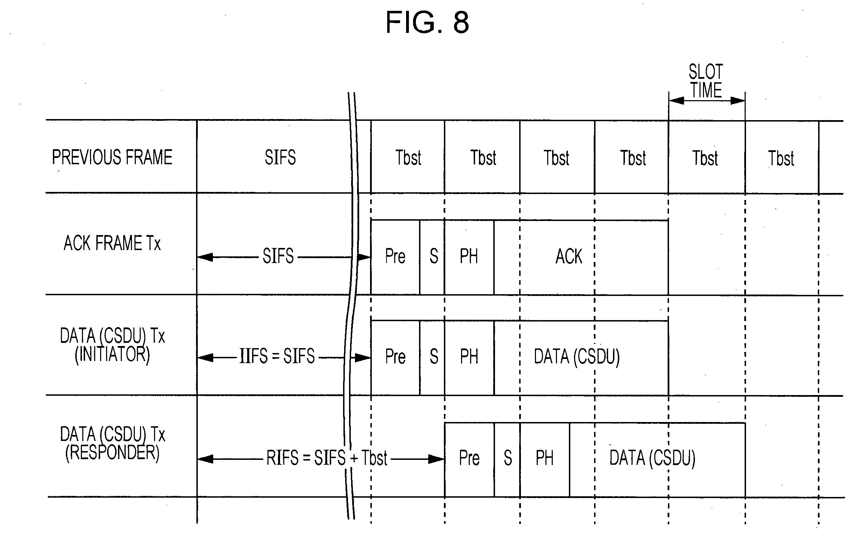

Fig. 8 schematically illustrates IFS examples used during communication between two communication apparatus in a first embodiment of the present technology.

Fig. 8 will be used to describe three IFS types: the short inter-frame space (SIFS), the IIFS, and the RIFS (see ECMA-398 10.4.4, for example). In Fig. 8, the SIFS is illustrated on the first (top) row, the IIFS on the second row, and the RIFS on the third (bottom) row. Herein, Tbst is taken to mean the slot time. The slot time refers to the time elapsed when transmitting a frame of minimum size.

The SIFS is the IFS used in order to transmit an Ack after receiving the previous frame (CSDU). Note that the SIFS is used for transmission from both initiator and responder.

The IIFS is the IFS used in order for the initiator to transmit a CSDU, and may be used after transmitting or receiving a previous frame (Ack), for example.

The RIFS is the IFS used in order for the responder to transmit a CSDU, and may be used after transmitting or receiving a previous frame (Ack), for example.

In this way, with TransferJet the concept of IFS is utilized to control initiator and responder transmit rights.

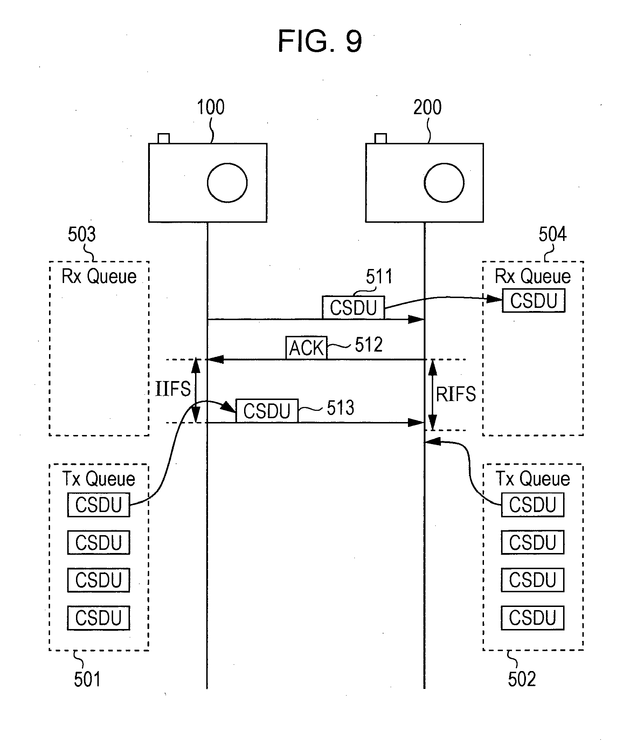

As illustrated in Fig. 8, the value of the IIFS (second row) used when the initiator transmits a CSDU is smaller than the value of the RIFS (third row) used when the responder transmits a CSDU (in other words, IIFS<RIFS). For this reason, it becomes possible for the initiator to take priority in transmitting a CSDU after a packet is transmitted or received by the initiator. In other words, the initiator repeatedly secures transmit rights after a packet is transmitted or received by the initiator, for as long as transmit data exists at the initiator. This priority of initiator transmission which is based on the difference between the IIFS and the RIFS will be described in detail with reference to Fig. 9.

Fig. 9 schematically illustrates a time series of data exchange between communication apparatus 100 and 200 in a first embodiment of the present technology. In Fig. 9, the vertical axis is taken to be a time axis.

As an example, a CSDU stored in a transmit queue (Tx queue) 501 of the communication apparatus (initiator) 100 is transmitted from the communication apparatus (initiator) 100 to the communication apparatus (responder) 200 (511) and stored in a receive queue (Rx queue) 504. Subsequently, an Ack in response to the transmission of that CSDU is transmitted from the communication apparatus (responder) 200 to the communication apparatus (initiator) 100 (512).

Herein, IIFS<RIFS, as discussed above. For this reason, transmit rights for the next transmission after the Ack (512) are granted to the communication apparatus (initiator) 100. Thus, after the Ack is received (512), a CSDU stored in the Tx queue 501 of the communication apparatus (initiator) 100 is transmitted from the communication apparatus (initiator) 100 to the communication apparatus (responder) 200 (513).

At this point, CSDUs are also being stored in a transmit queue (Tx queue) 502 of the communication apparatus (responder) 200. However, the CSDUs stored in the transmit queue (Tx queue) of the communication apparatus (responder) 200 will not be transmitted while transmit rights are granted to the communication apparatus (initiator) 100.

This phenomenon occurs as a result of the TransferJet specification. At this point, suppose that a protocol mandating Ack exchange is implemented as an upper layer protocol above TransferJet. For example, suppose that Transmission Control Protocol and Internet Protocol (TCP/IP) is implemented as the protocol mandating Ack exchange. In this case, there is a risk of greatly reduced throughput in the upper layer protocol in the case where the responder is unable to obtain to obtain transmit rights and a large delay is incurred before CSDUs are transmitted from the responder.

For example, with TCP/IP, throughput is defined by the Ack round-trip time (RTT). Typically, the RTT ranges from several milliseconds to several hundred milliseconds, depending on the communication channel. However, in situations where the initiator dominates the bandwidth as illustrated in Fig. 9, the responder may not be able to transmit an Ack for a TCP packet transmitted by the initiator. In such cases, TCP/IP throughput is greatly reduced.

Thus, in the first embodiment of the present technology, it is configured such that the responder is also able to transmit CSDUs at given timings.

Figs. 10A to 10C schematically illustrate time series of IFS periods, which are modified on the basis of an IIFS switch trigger issued by an IIFS timer 150 in a first embodiment of the present technology. In Figs. 10A to 10C, the vertical axis is taken to be a time axis.

As discussed earlier, the IIFS in the initiator is switched at given timings (periodically or irregularly) so as to also enable the responder to transmit CSDUs at given timings. For example, the IIFS may be switched between the following values (1) and (2).
(1) IIFS=SIFS
(2) IIFS=RIFS+Tbst=SIFS+2×Tbst

Herein, the above (1) is the ordinary IIFS. Also, the transmit start timing for data to be transmitted to the responder (i.e., the first transmit start timing) is determined by the values of the above (1) and (2). Meanwhile, the transmit start timing for data at the responder to be transmitted to the communication apparatus 100 (i.e., the second transmit start timing) is determined by the value of the RIFS in the responder.

Fig. 10A illustrates a time series of respective periods in the case of periodically switching the IIFS between (1) and (2) every T ms. The value of T may be taken to be T=5 ms, for example.

First, (1) (IIFS=SIFS) may be set as the IIFS, for example, as indicated by the uppermost block "IIFS period" illustrated in Fig. 10A. Subsequently, T ms after setting (1), (2) (IIFS=RIFS+Tbst) is set as the IIFS, as indicated by the second block from the top "RIFS+Tbst period" illustrated in Fig. 10A. Subsequently, T ms after setting (2), (1) (IIFS=SIFS) is set as the IIFS, as indicated by the third block from the top "IIFS period" illustrated in Fig. 10A. Similarly thereafter, the IIFS is successively switched between (1) and (2) as illustrated in Fig. 10A.

Fig. 10B illustrates a time series of respective periods in the case of periodically switching the IIFS between (1) and (2) according to a time ratio of 1:m (where m is a positive integer equal to or greater than 2). The values of T and m may be taken to be T=1 ms and m=10, for example.

First, (1) (IIFS=SIFS) may be set as the IIFS, for example, as indicated by the uppermost block "IIFS period" illustrated in Fig. 10B. Subsequently, T ms after setting (1), (2) (IIFS=RIFS+Tbst) is set as the IIFS, as indicated by the second block "RIFS+Tbst period" from the top illustrated in Fig. 10B. Subsequently, mT ms after setting (2), (1) (IIFS=SIFS) is set as the IIFS, as indicated by the third block from the top "IIFS period" illustrated in Fig. 10B. Similarly thereafter, the IIFS is successively switched between (1) and (2) as illustrated in Fig. 10B.

Fig. 10C illustrates a time series of respective periods in the case of periodically switching the IIFS between (1) and (2) according to a time ratio of n:1 (where n is a positive integer equal to or greater than 2). The values of T and n may be taken to be T=5 ms and n=2, for example.

First, (1) (IIFS=SIFS) may be set as the IIFS, for example, as indicated by the uppermost block "IIFS period" illustrated in Fig. 10C. Subsequently, nT ms after setting (1), (2) (IIFS=RIFS+Tbst) is set as the IIFS, as indicated by the second block "RIFS+Tbst period" from the top illustrated in Fig. 10C. Subsequently, T ms after setting (2), (1) (IIFS=SIFS) is set as the IIFS, as indicated by the third block from the top "IIFS period" illustrated in Fig. 10C. Similarly thereafter, the IIFS is successively switched between (1) and (2) as illustrated in Fig. 10C.

Although Figs. 10A to 10C illustrate examples in which the time ratios for the periods corresponding to (1) and (2) are taken to be 1:1, 1:m, and n:1, it may also be configured such that other time ratios are used. For example, a ratio N:M (where N and M are positive, non-equal integers equal to or greater than 1) may be used as the time ratio for the periods corresponding to (1) and (2).

Additionally, the reference positions at which (1) and (2) are switched (i.e., positions on the time axis) may be set to arbitrary positions. Also, as discussed above, the period during which transmit rights are granted to the initiator corresponds to the "IIFS period" illustrated in Figs. 10A to 10C. The transmit start timing in this "IIFS period" (i.e., the first transmit start timing) occurs earlier than the second transmit start timing (i.e., the transmit start timing for data at the responder to be transmitted to the initiator). Also, the period during which transmit rights are granted to the responder corresponds to the "RIFS+Tbst period" illustrated in Figs. 10A to 10C. The first transmit start timing in this "RIFS+Tbst period" occurs later than the second transmit start timing.

The switching between (1) and (2) is conducted asynchronously with the CNL protocol 311 in the TransferJet CNL layer 310 (illustrated in Fig. 3). Herein, asynchronously means that the switching between (1) and (2) can be conducted irrespectively of the operation of the CNL protocol 311, without taking the operation of the CNL protocol 311 into account. Switching asynchronously with the CNL protocol 311 in this way lessens the difficulty of a driver implementation.

Furthermore, if the IIFS switched in this way is observed over a long period, the average of (1) and (2) asymptotically approaches <IIFS>≅SIFS+Tbst=RIFS. Thus, the initiator transmission throughput asymptotically approaches the responder transmission throughput. Herein, <IIFS> represents the value of IIFS averaged over the long term.

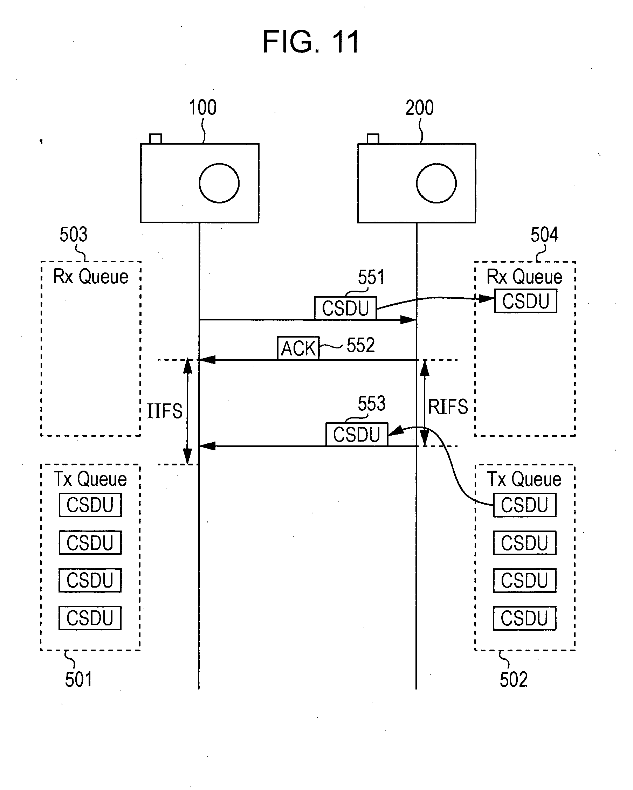

Fig. 11 schematically illustrates a time series of data exchange between communication apparatus 100 and 200 in a first embodiment of the present technology. Since the example illustrated in Fig. 11 is a partial modification of Fig. 9, portions corresponding to Fig. 9 are given like reference signs and description thereof will be reduced or omitted.

Specifically, Fig. 11 illustrates an example of data exchange in the case where the initiator has been switched to the RIFS+Tbst period (illustrated in Figs. 10A to 10C).

Similarly to Fig. 9, a CSDU stored in a transmit queue (Tx queue) 501 of the communication apparatus (initiator) 100 is transmitted from the communication apparatus (initiator) 100 to the communication apparatus (responder) 200 (551) and stored in a receive queue (Rx queue) 504. Subsequently, an Ack in response to the transmission of that CSDU is transmitted from the communication apparatus (responder) 200 to the communication apparatus (initiator) 100 (552).

At this point, since the communication apparatus (initiator) 100 is in the RIFS+Tbst period, IIFS>RIFS as discussed earlier. For this reason, transmit rights for the next transmission after the Ack (552) are granted to the communication apparatus (responder) 200. Thus, after the Ack is received (552), a CSDU stored in the Tx queue 502 of the communication apparatus (responder) 200 is transmitted from the communication apparatus (responder) 200 to the communication apparatus (initiator) 100 (553).

Similarly, transmit rights continue to be granted to the communication apparatus (responder) 200 while the communication apparatus (initiator) 100 is in the RIFS+Tbst period. For this reason, CSDUs stored in the transmit queue (Tx queue) 502 of the communication apparatus (responder) 200 can be successively transmitted.

Conversely, in the case where the communication apparatus (initiator) 100 is in the IIFS period, transmit rights are granted to the communication apparatus (initiator) 100. In this case, transmit rights continue to be granted to the communication apparatus (initiator) 100 while the communication apparatus (initiator) 100 is in the IIFS period. For this reason, CSDUs stored in the transmit queue (Tx queue) 501 of the communication apparatus (initiator) 100 can be successively transmitted.

In this way, in the case where the communication apparatus (initiator) 100 is in the IIFS period, transmit rights are continually granted to the communication apparatus (initiator) 100, and thus CSDUs can be successively transmitted from the communication apparatus (initiator) 100. Conversely, in the case where the communication apparatus (initiator) 100 is in the RIFS+Tbst period, transmit rights are continually granted to the communication apparatus (responder) 200, and thus CSDUs can be successively transmitted from the communication apparatus (responder) 200. Thus, it is possible to alternately grant transmit rights to the communication apparatus (initiator) 100 and the communication apparatus (responder) 200.

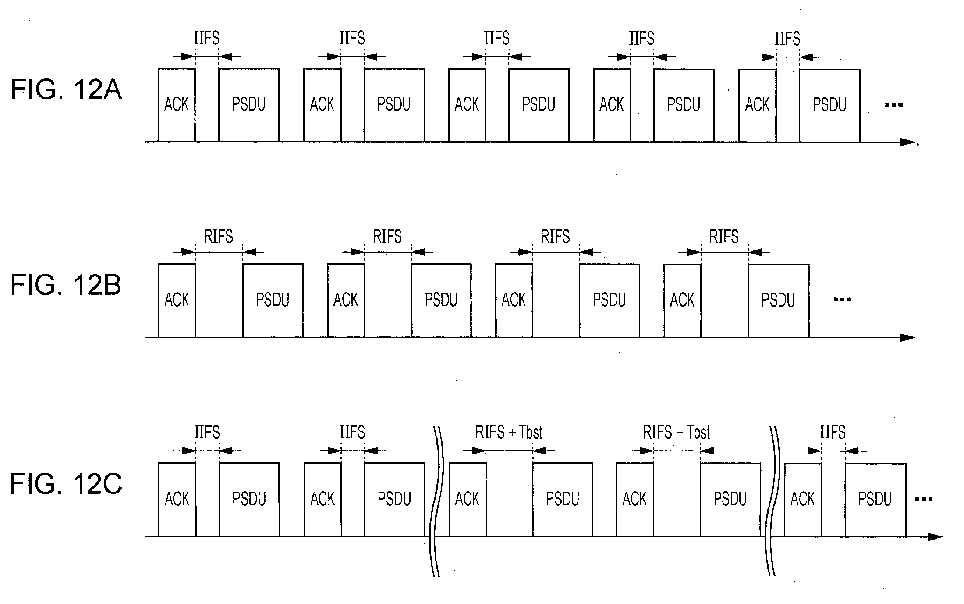

Figs. 12A to 12C illustrate time series of example relationships between Ack and PSDU (PHY SDU) transmitted and received between two communication apparatus in a first embodiment of the present technology. In Figs. 12A to 12C, the horizontal axis is taken to be a time axis.

Fig. 12A illustrates an example relationship between Ack and PSDU in the case where the IIFS is not switched at the initiator. In this case, PSDUs are consecutively transmitted from initiator to responder for as long as PSDUs exist at the initiator.

Fig. 12B illustrates an example relationship between Ack and PSDU in the case where the IIFS is not switched at the initiator. In this case, PSDUs are consecutively transmitted from responder to initiator after PSDU transmission finishes at the initiator. In other words, the transmission illustrated in Fig. 12B is conducted after the transmission illustrated in Fig. 12A finishes.

Fig. 12C illustrates an example relationship between Ack and PSDU in the case where the IIFS is switched at the initiator. In this case, PSDUs are alternately transmitted from both the initiator and the responder, even while PSDUs exist at the initiator.

Next, operation of a communication apparatus 100 according to the first embodiment of the present technology will be described with reference to the drawings.

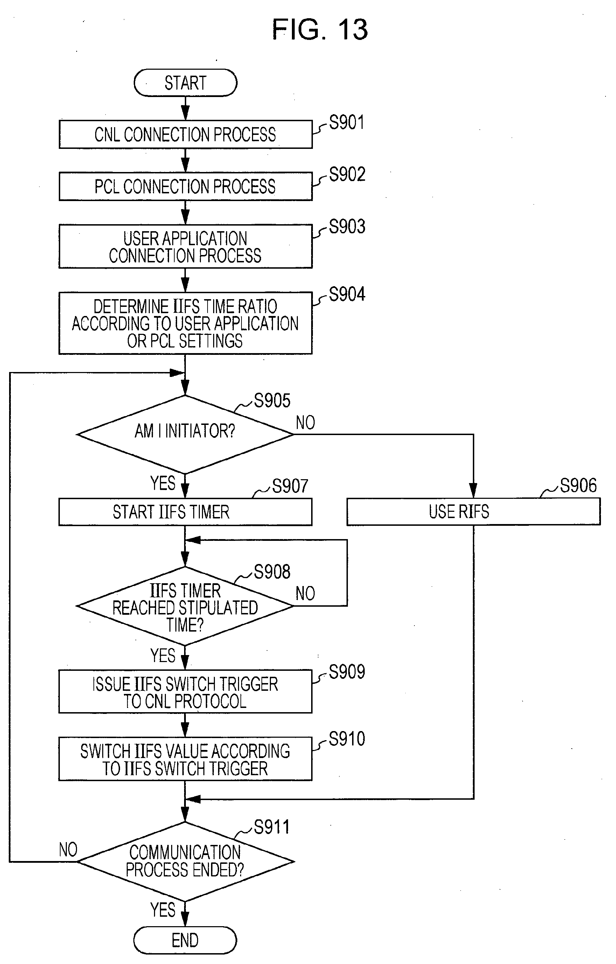

Fig. 13 is a flowchart illustrating an example processing sequence for a communication process conducted by a communication apparatus 100 in a first embodiment of the present technology.

First, a CNL layer 310 connection process is conducted (step S901). Subsequently, a PCL layer 320 connection process is conducted (step S902). Subsequently, a user application layer 330 connection process is conducted (step S903).

Subsequently, the controller 130 determines the ratio of the IIFS period (i.e., the first set time and the second set time) on the basis of settings in the user application layer 330 or the PCL layer 320 (step S904). For example, the IIFS period (i.e., the first set time and the second set time) and its ratio may be determined on the basis of settings for the round-trip time (RTT) requested by the PCL layer 320 or the user application layer 330. In this case, optimal switching times are set so as to maximize throughput in the upper layers, for example. For example, the IIFS period (i.e., the switching times) may be taken to be 2.5 ms:2.5 ms in the case where the RTT is set to 10 ms, and may be taken to be 5 ms:5 ms in the case where the RTT is set to 20 ms. Additionally, it may also be configured such that statistically computed data is used as a basis for suitably setting optimal switching times and their ratio (N:M) so as to maximize throughput in the upper layers.

Subsequently, the controller 130 determines whether or not the communication apparatus 100 is the initiator (step S905). In the case where the communication apparatus 100 is the responder (step S905), a communication process using the RIFS is conducted (step S906).

In the case where the communication apparatus 100 is the initiator (step S905), a count is initiated by the IIFS timer 150 (step S907).

Subsequently, the IIFS timer 150 determines whether or not a stipulated time (i.e., the first set time or the second set time) has been reached (step S908), and continues to monitor the count in the case where the stipulated time has not been reached. Meanwhile, in the case where the stipulated time (i.e., the first set time or the second set time) is reached (step S908), the IIFS timer 150 issues an IIFS switch trigger (step S909). Herein, the first set time and the second set time are alternately set as the stipulated time, and an IIFS trigger is issued on the basis of the respective times alternately set in this way.

Subsequently, the controller 130 switches the value of the IIFS according to the IIFS switch trigger issued by the IIFS timer 150 (step S910). In other words, the value of the IIFS is successively switched as illustrated in Figs. 10A to 10C (step S910), and a communication process is conducted using IIFS values switched in this way. Additionally, it is determined whether or not the communication process has ended (step S911), with the process returning to step S905 in the case where the communication process has not ended. Steps S901 to S911 herein are one example of a communication sequence. Also, steps S905 to S910 herein are one example of a control sequence.

Meanwhile, since protocols wherein either initiator or responder continually transmits within a given period (such as Object Exchange (OBEX)) lack the concept of delay in received Ack, improvement is anticipated to be minor. Consequently, it may also be configured such that the decision of whether or not switch the IIFS is determined depending on the particular protocol, such as OBEX, Small Computer System Interface (SCSI), Mass Storage Class (MSC), or TCP/IP. For example, IIFS switching may be turned off for OBEX but turned on for SCSI, MCS, and TCP/IP. In so doing, optimal throughput characteristics for each protocol are obtained.

As discussed earlier, TransferJet uses CSMA/CA as the access method, and implements a protocol that prioritizes the initiator. For this reason, the initiator dominates the bandwidth at times of high throughput, and the responder transmit delay increases. If the responder delay increases in this way, there is a risk of Acks from the responder not arriving for protocols that utilize Acks, such as TCP/IP. In such cases, throughput is greatly reduced.

Consequently, in the first embodiment of the present technology, the transmit start timing between initiator and responder is shifted by switching the IIFS at the initiator. In so doing, transmit rights (i.e., the right to speak) can be alternately granted at arbitrary timings, and a loose time-division control can be introduced. Also, Ack delay can be reduced and throughput can be improved for Ack-based protocols in layers above the CNL layer. For example, the first embodiment is highly effective with protocols in which initiator and responder alternately transmit, such as TCP/IP, and is beneficial in systems where the throughput is greatly reduced because of delayed Acks from the receiver. The transmit throughput at the initiator does decrease, but the degree of this decrease can be mitigated.

In addition, the granting of transmit rights (i.e., the right to speak) alternately between initiator and responder can be executed asynchronously with the CNL protocol. For this reason, the difficulty of implementing the protocol can be greatly reduced.

The first embodiment of the present technology illustrates an example in which transmit rights are alternately granted between initiator and responder by switching the initiator IFS (IIFS) while keeping the responder IFS (RIFS) fixed. However, it may also be configured such that transmit rights are alternately granted between initiator and responder by switching the responder IFS (RIFS) while keeping the initiator IFS (IIFS) fixed. In this case, the responder IFS is made shorter than the initiator IFS (IIFS) when granting transmit rights to the responder. In other words, by setting the responder IFS to a shorter period than the initiator IFS (IIFS), the responder is able to obtain a transmit opportunity. Also, the responder IFS (RIFS) switching control is conducted by a controller at the responder.

It should be appreciated that the foregoing embodiment illustrates an example for realizing the present technology, and that respective matters of the embodiment have a corresponding relationship with the respective matters specifying the technology in the claims. Similarly, the respective matters specifying the technology in the claims have a corresponding relationship with like-named matters of the embodiment of the present technology. However, the present technology is not limited to the embodiment, and may be realized by applying various modifications to the embodiment within a scope that does not depart from the principal matter according to the appended claims.

Furthermore, the processing sequence described in the foregoing embodiment may be interpreted as a method having a series of such steps, but may also be interpreted as a program for causing a computer to execute a series of such steps as well as a recording medium storing such a program. The medium used as the recording medium may be a Compact Disc (CD), MiniDisc (MD), Digital Versatile Disc (DVD), memory card, or Blu-ray Disc (registered trademark), for example.

The present disclosure contains subject matter related to that disclosed in Japanese Priority Patent Application JP 2011-200875 filed in the Japan Patent Office on September 14, 2011.

It should be understood by those skilled in the art that various modifications, combinations, sub-combinations and alterations may occur depending on design requirements and other factors insofar as they are within the scope of the appended claims.

## Claims

1. A communication apparatus (100, 200) comprising:
a communication unit (120) configured to conduct close proximity wireless communication on the basis of TransferJet with another communication apparatus;
a timer (150) configured to alternately time a first set time during which transmit rights are granted to the communication apparatus and a second set time during which transmit rights are granted to the other communication apparatus, and issue a notification to a controller when each time is reached; and
a controller (130) configured:
to apply control, in the case where the communication apparatus is the initiator of communication, to alternately set transmit rights for transmitting data to a communication peer by the close proximity wireless communication between the communication apparatus and the other communication apparatus by adjusting the transmit start timing for data to be transmitted to the other communication apparatus by modifying the value of the inter-frame space, IFS, used to transmit data to the other communication apparatus every time the first set time or the second set time is respectively reached;
to adopt the value of the initiator inter-frame space, IIFS, as the IFS in the case of granting transmit rights to the communication apparatus; and
to adopt a value larger than the responder inter-frame space, RIFS, as the IFS in the case of granting transmit rights to the other communication apparatus.

2. The communication apparatus according to Claim 1, wherein
the controller makes the adjustment by shifting a first transmit start timing with respect to a second transmit start timing, with the first transmit start timing being taken to be the above transmit start timing, and the second transmit start timing being taken to be the transmit start timing for data at the other communication apparatus to be transmitted to the communication apparatus.

3. The communication apparatus according to Claim 2, wherein
the controller sets the first transmit start timing to an earlier timing than the second transmit start timing in the case of granting transmit rights to the communication apparatus, and sets the first transmit start timing to a later timing than the second transmit start timing in the case of granting transmit rights to the other communication apparatus.

4. The communication apparatus according to Claim 1, 2 or 3, wherein
the controller determines the ratio between a first set time during which transmit rights are granted to the communication apparatus and a second set time during which transmit rights are granted to the other communication apparatus, on the basis of settings in a user application layer or a protocol conversion layer (PCL).

5. A communication system comprising:
a second communication apparatus (200) that includes
a communication unit configured to conduct close proximity wireless communication on the basis of TransferJet with a first communication (100) apparatus on the basis of transmit rights for transmitting data to a communication peer; and
a first communication apparatus that includes
a communication unit (120) configured to conduct close proximity wireless communication on the basis of TransferJet with the second communication apparatus on the basis of the transmit rights,
a timer (150) configured to alternately time a first set time during which transmit rights are granted to the communication apparatus and a second set time during which transmit rights are granted to the other communication apparatus, and issue a notification to a controller when each time is reached; and
a controller (130) configured:
in the case where the first communication apparatus is the initiator of communication, to alternately grant transmit rights to the first communication apparatus and the second communication apparatus by adjusting a transmit start timing for data to be transmitted to the second communication apparatus by modifying the value of the inter-frame space, IFS, used to transmit data to the other communication apparatus every time the first set time or the second set time is respectively reached;
to adopt the value of the initiator inter-frame space, IIFS, as the IFS in the case of granting transmit rights to the communication apparatus; and
to adopt a value larger than the responder inter-frame space, RIFS, as the IFS in the case of granting transmit rights to the other communication apparatus.

6. A method of controlling a communication apparatus, comprising:
conducting close proximity wireless communication on the basis of TransferJet with another communication apparatus;
alternately timing a first set time during which transmit rights are granted to the communication apparatus and a second set time during which transmit rights are granted to the another communication apparatus, and issuing a notification when each time is reached; and
applying control to:
in the case where the first communication apparatus is the initiator (S905) of communication, alternately set transmit rights for transmitting data to a communication peer by the close proximity wireless communication between the communication apparatus and the other communication apparatus by adjusting the transmit start timing for data to be transmitted to the other communication apparatus, by modifying the value of the inter-frame space, IFS, used to transmit data to the other communication apparatus every time the first set time or the second set time is respectively reached;
adopting the value of the initiator inter-frame space, IIFS, as the IFS in the case of granting transmit rights to the communication apparatus; and
adopting a value larger than the responder inter-frame space, RIFS, as the IFS in the case of granting transmit rights to the other communication apparatus.

## Patentansprüche

1. Kommunikationsvorrichtung (100, 200), die Folgendes umfasst:
eine Kommunikationseinheit (120), die konfiguriert ist, drahtlose Nahbereichskommunikation auf der Basis von TransferJet mit einer weiteren Kommunikationsvorrichtung durchzuführen;
einen Zeitgeber (150), der konfiguriert ist, alternierend eine erste festgelegte Zeit, während derer Senderechte für die Kommunikationsvorrichtung erteilt sind, und eine zweite festgelegte Zeit, während derer Senderechte für die andere Kommunikationsvorrichtung erteilt sind, einzustellen und eine Meldung zu einer Steuereinheit auszugeben, wenn jede Zeit erreicht ist; und
eine Steuereinheit (130), die konfiguriert ist:
ein Steuerung anzuwenden in dem Fall, in dem die Kommunikationsvorrichtung der Initiator der Kommunikation ist, um alternierend Senderechte zum Senden von Daten zu einem Kommunikationspartner durch drahtlose Nahbereichskommunikation zwischen der Kommunikationsvorrichtung und der anderen Kommunikationsvorrichtung festzulegen durch Anpassen der Sendestartzeit für Daten, die zu der anderen Kommunikationsvorrichtung gesendet werden sollen, durch Modifizieren des Wertes des Zwischenrahmenraums, IFS, der verwendet wird, um Daten zu der anderen Kommunikationsvorrichtung zu senden, jedes Mal, wenn die erste festgelegte Zeit bzw. die zweite festgelegte Zeit erreicht ist;
den Wert des Initiator-Zwischenrahmenraums, IIFS, als den IFS in dem Fall anzuwenden, in dem Senderechte der Kommunikationsvorrichtung erteilt werden; und
einen Wert größer als der Antwortgerät-Zwischenrahmenraum, RIFS, als den IFS in dem Fall anzuwenden, in dem Senderechte der anderen Kommunikationsvorrichtung erteilt werden.

2. Kommunikationsvorrichtung nach Anspruch 1, wobei
die Steuereinheit die Anpassung durch Verschieben einer ersten Sendestartzeiteinstellung in Bezug auf eine zweite Sendestartzeiteinstellung ausführt, wobei von der ersten Sendestartzeiteinstellung angenommen wird, dass sie die vorstehende Sendestartzeiteinstellung ist, und von der zweiten Sendestartzeiteinstellung angenommen wird, dass sie die Sendestartzeiteinstellung für Daten in der anderen Kommunikationsvorrichtung, die zu der Kommunikationsvorrichtung gesendet werden sollen, ist.

3. Kommunikationsvorrichtung nach Anspruch 2, wobei
die Steuereinheit die erste Sendestartzeiteinstellung auf eine frühere Zeiteinstellung als die zweite Sendestartzeiteinstellung festlegt in dem Fall, in dem Senderechte der Kommunikationsvorrichtung erteilt werden, und die erste Sendestartzeiteinstellung festlegt, dass sie eine spätere Zeiteinstellung als die zweite Sendestartzeiteinstellung ist in dem Fall, in dem Senderechte der anderen Kommunikationsvorrichtung erteilt werden.

4. Kommunikationsvorrichtung nach Anspruch 1, 2 oder 3, wobei
die Steuereinheit das Verhältnis zwischen einer ersten festgelegten Zeit, während der Senderechte der Kommunikationsvorrichtung erteilt sind, und einer zweiten festgelegten Zeit, während der Senderechte der anderen Kommunikationsvorrichtung erteilt sind, auf der Basis von Festlegungen in einer Anwender-Anwendungsschicht oder einer Protokollumsetzungsschicht (PCL) bestimmt.

5. Kommunikationssystem, das Folgendes enthält:
eine zweite Kommunikationsvorrichtung (200), die Folgendes umfasst:
eine Kommunikationseinheit, die konfiguriert ist, Nahbereichskommunikation auf der Basis von TransferJet mit einer ersten Kommunikationsvorrichtung (100) auf der Basis von Senderechten zum Senden von Daten zu einem Kommunikationspartner durchzuführen;
und eine erste Kommunikationsvorrichtung, die Folgendes enthält:
eine Kommunikationseinheit (120), die konfiguriert ist, Nahbereichskommunikation auf der Basis von TransferJet mit der zweiten Kommunikationsvorrichtung auf der Basis der Senderechte durchzuführen,
einen Zeitgeber (150), der konfiguriert ist, alternierend eine erste festgelegte Zeit, während derer Senderechte für die Kommunikationsvorrichtung erteilt sind, und eine zweite festgelegte Zeit, während derer Senderechte für die andere Kommunikationsvorrichtung erteilt sind, einzustellen und eine Meldung zu einer Steuereinheit auszugeben, wenn jede Zeit erreicht ist;
und eine Steuereinheit (130), die konfiguriert ist:
in dem Fall, in dem die Kommunikationsvorrichtung der Initiator der Kommunikation ist, alternierend Senderechte der ersten Kommunikationsvorrichtung und der zweiten Kommunikationsvorrichtung zu erteilen durch Anpassen der Sendestartzeiteinstellung für Daten, die zu der zweiten Kommunikationsvorrichtung gesendet werden sollen, durch Modifizieren des Wertes des Zwischenrahmenraums, IFS, der verwendet wird, um Daten zu der anderen Kommunikationsvorrichtung zu senden, jedes Mal, wenn die erste festgelegte Zeit bzw. die zweite festgelegte Zeit erreicht ist;
den Wert des Initiator-Zwischenrahmenraums, IIFS, als den IFS anzuwenden in dem Fall, in dem Senderechte der Kommunikationsvorrichtung erteilt werden; und
einen Wert größer als der Antwortgerät-Zwischenrahmenraum, RIFS, als den IFS anzuwenden in dem Fall, in dem Senderechte der anderen Kommunikationsvorrichtung erteilt werden.

6. Verfahren zum Steuern einer Kommunikationsvorrichtung, das Folgendes umfasst:
Durchführen von drahtloser Nahbereichskommunikation auf der Basis von TransferJet mit einer weiteren Kommunikationsvorrichtung;
alternierendes Zeiteinstellen einer ersten festgelegten Zeit, während derer Senderechte für die Kommunikationsvorrichtung erteilt sind, und einer zweiten festgelegten Zeit, während derer Senderechte für die weitere Kommunikationsvorrichtung erteilt sind, und Ausgeben einer Meldung, wenn jede Zeit erreicht ist; und
Anwenden von Steuerung:
um in dem Fall, in dem die Kommunikationsvorrichtung der Initiator (S905) der Kommunikation ist, alternierend Senderechte zum Senden von Daten zu einem Kommunikationspartner durch drahtlose Nahbereichskommunikation zwischen der Kommunikationsvorrichtung und der anderen Kommunikationsvorrichtung zu erteilen durch Anpassen der Sendestartzeiteinstellung für Daten, die zu der anderen Kommunikationsvorrichtung gesendet werden sollen, durch Modifizieren des Wertes des Zwischenrahmenraums, IFS, der verwendet wird, um Daten zu der anderen Kommunikationsvorrichtung zu senden, jedes Mal, wenn die erste festgelegte Zeit bzw. die zweite festgelegte Zeit erreicht ist;
den Wert des Initiator-Zwischenrahmenraums, IIFS, als den IFS in dem Fall anzuwenden, in dem Senderechte der Kommunikationsvorrichtung erteilt werden; und
einen Wert größer als der Antwortgerät-Zwischenrahmenraum, RIFS, als den IFS anzuwenden in dem Fall, in dem Senderechte der anderen Kommunikationsvorrichtung erteilt werden.

## Revendications

1. Appareil de communication (100, 200) comprenant :
une unité de communication (120) configurée pour réaliser une communication sans fil de grande proximité sur la base de TransferJet avec un autre appareil de communication ;
une horloge (150) configurée pour chronométrer alternativement un premier temps fixé durant lequel des droits de transmission sont accordés à l'appareil de communication et un deuxième temps fixé durant lequel des droits de transmission sont accordés à l'autre appareil de communication, et envoyer une notification à un contrôleur lorsque chaque temps est atteint ; et
un contrôleur (130) configuré pour :
appliquer un contrôle, dans le cas où l'appareil de communication est l'initiateur de la communication, pour fixer alternativement des droits de transmission permettant de transmettre des données à un poste de communication par la communication sans fil de grande proximité entre l'appareil de communication et l'autre appareil de communication en ajustant le temps de début de transmission pour des données devant être transmises à l'autre appareil de communication, en modifiant la valeur de l'espace inter-trame, IFS, utilisé pour transmettre des données à l'autre appareil de communication à chaque fois que le premier temps fixé ou le deuxième temps fixé est respectivement atteint ;
adopter la valeur de l'espace inter-trame initiateur, IIFS, comme l'IFS dans le cas où des droits de transmission sont accordés à l'appareil de communication ; et
adopter une valeur supérieure à l'espace inter-trame répondeur, RIFS, comme l'IFS dans le cas où des droits de transmission sont accordés à l'autre appareil de communication.

2. Appareil de communication selon la revendication 1, dans lequel
le contrôleur effectue l'ajustement en décalant un premier temps de début de transmission par rapport à un deuxième temps de début de transmission, le premier temps de début de transmission étant déterminé pour être le temps de début de transmission ci-dessus, et le deuxième temps de début de transmission étant déterminé pour être le temps de début de transmission pour des données stockées sur l'autre appareil de communication devant être transmises à l'appareil de communication.

3. Appareil de communication selon la revendication 2, dans lequel
le contrôleur fixe le premier temps de début de transmission à un temps antérieur au deuxième temps de début de transmission dans le cas où des droits de transmission sont accordés à l'appareil de communication, et fixe le premier temps de début de transmission à un temps ultérieur au deuxième temps de début de transmission dans le cas où des droits de transmission sont accordés à l'autre appareil de communication.

4. Appareil de communication selon la revendication 1, 2 ou 3, dans lequel
le contrôleur détermine le rapport entre un premier temps fixé durant lequel des droits de transmission sont accordés à l'appareil de communication et un deuxième temps fixé durant lequel des droits de transmission sont accordés à l'autre appareil de communication, sur la base de paramètres d'une couche d'application utilisateur ou d'une couche de conversion de protocoles (PCL).

5. Système de communication comprenant :
un deuxième appareil de communication (200) qui comprend
une unité de communication configurée pour réaliser une communication sans fil de grande proximité sur la base de TransferJet avec un premier appareil de communication (100) en fonction de droits de transmission permettant de transmettre des données à un poste de communication ; et
un premier appareil de communication qui comprend
une unité de communication (120) configurée pour réaliser une communication sans fil de grande proximité sur la base de TransferJet avec le deuxième appareil de communication en fonction des droits de transmission,
une horloge (150) configurée pour chronométrer alternativement un premier temps fixé durant lequel des droits de transmission sont accordés à l'appareil de communication et un deuxième temps fixé durant lequel des droits de transmission sont accordés à l'autre appareil de communication, et envoyer une notification à un contrôleur lorsque chaque temps est atteint ; et
un contrôleur (130) configuré pour :
dans le cas où le premier appareil de communication est l'initiateur de la communication, accorder alternativement des droits de transmission au premier appareil de communication et au deuxième appareil de communication en ajustant un temps de début de transmission pour des données devant être transmises au deuxième appareil de communication, en modifiant la valeur de l'espace inter-trame, IFS, utilisé pour transmettre des données à l'autre appareil de communication à chaque fois que le premier temps fixé ou le deuxième temps fixé est respectivement atteint ;
adopter la valeur de l'espace inter-trame initiateur, IIFS, comme l'IFS dans le cas où des droits de transmission sont accordés à l'appareil de communication ; et
adopter une valeur supérieure à l'espace inter-trame répondeur, RIFS, comme l'IFS dans le cas où des droits de transmission sont accordés à l'autre appareil de communication.

6. Procédé permettant de commander un appareil de communication, comprenant :
réaliser une communication sans fil de grande proximité sur la base de TransferJet avec un autre appareil de communication ;
chronométrer alternativement un premier temps fixé durant lequel des droits de transmission sont accordés à l'appareil de communication et un deuxième temps fixé durant lequel des droits de transmission sont accordés à l'autre appareil de communication, et envoyer une notification lorsque chaque temps est atteint ; et
appliquer un contrôle pour :
dans le cas où le premier appareil de communication est l'initiateur (S905) de la communication, fixer alternativement des droits de transmission permettant de transmettre des données à un poste de communication par la communication sans fil de grande proximité entre l'appareil de communication et l'autre appareil de communication en ajustant le temps de début de transmission pour des données devant être transmises à l'autre appareil de communication, en modifiant la valeur de l'espace inter-trame, IFS, utilisé pour transmettre des données à l'autre appareil de communication à chaque fois que le premier temps fixé ou le deuxième temps fixé est respectivement atteint ;
adopter la valeur de l'espace inter-trame initiateur, IIFS, comme l'IFS dans le cas où des droits de transmission sont accordés à l'appareil de communication ; et
adopter une valeur supérieure à l'espace inter-trame répondeur, RIFS, comme l'IFS dans le cas où des droits de transmission sont accordés à l'autre appareil de communication.
